# EUROPÄISCHE PATENTANMELDUNG

(11) **EP 3 095 642 A1**
(43) Veröffentlichungstag der Anmeldung: **23.11.2016**
(21) Anmeldenummer: 15168202.8
(22) Anmeldetag: 19.05.2015
(51) Int. Cl.: B60Q 3/00

(54) **LICHTLEITVORRICHTUNG MIT VERBESSERTER LICHTABDECKUNG**

(71) Anmelder: Illinois Tool Works Inc., Glenview, IL 60025 (US)
(72) Erfinder: Fries, Elmar, 97285 Röttingen (DE); Lüders, Heiko, 97346 Iphofen (DE)
(74) Vertreter: Liefhold, Christian

(57) **Zusammenfassung**

Lichtleitvorrichtung (1) für ein Kraftfahrzeug, wobei die Lichtleitvorrichtung (1) einen Lichtleitkörper (10) aus durchsichtigem Kunststoffmaterial aufweist, wobei der Lichtleitkörper (10) mindestens eine Lichteintrittsfläche (11) und mindestens eine Lichtaustrittsfläche (12) aufweist und wobei der Lichtleitkörper (10) in einem Bereich mittels eines im Wesentlichen lichtundurchlässigen Abdeckmaterials (20) abgedeckt ist, wobei das Abdeckmaterial (20) mittels eines Spritzgussverfahrens auf den Bereich aufgebracht ist.

Verwendung einer solchen Lichtleitvorrichtung (1) in einem Kraftfahrzeug und Verfahren zum Herstellen einer solchen Lichtleitvorrichtung (1).

## Beschreibung

Die Erfindung betrifft Lichtleitvorrichtungen für Kraftfahrzeuge, insbesondere zu dekorativen Zwecken und/oder Zwecken der Innenraumbeleuchtung oder bspw. Türschwellenbeleuchtung des Kraftfahrzeugs.

Im Stand der Technik existieren derartige Lichtleitvorrichtungen, die nach dem Einbau an den Stellen, an denen kein Licht (Streulicht) austreten soll, mit einem Abdeckmaterial z.B. Klebeband/Klebefilz verdeckt werden. Die Erfinder befanden den Stand der Technik insofern als nachteilig, als dies zu aufwendigen Montagearbeiten und je nach aufgewendeter Abdeckung ungenügender Lichtabschottung führt.

Aufgabe der vorliegenden Erfindung ist es, die Nachteile des Stands der Technik zu verbessern. Die Aufgabe wird durch die unabhängigen Ansprüche gelöst. Vorteilhafte Weiterbildungen sind in den Unteransprüchen definiert.

Insbesondere wird die Aufgabe gelöst durch eine Lichtleitvorrichtung für ein Kraftfahrzeug, wobei die Lichtleitvorrichtung einen Lichtleitkörper aus durchsichtigem Kunststoffmaterial aufweist, wobei der Lichtleitkörper mindestens eine Lichteintrittsfläche und mindestens eine Lichtaustrittsfläche aufweist und wobei der Lichtleitkörper in einem Bereich mittels eines im Wesentlichen lichtundurchlässigen Abdeckmaterials abgedeckt ist, wobei das Abdeckmaterial mittels eines Spritzgussverfahrens auf den Bereich aufgebracht ist.

Die Aufgabe wird weiterhin insbesondere gelöst durch die Verwendung einer erfindungsgemäßen Lichtleitvorrichtung in einem Kraftfahrzeug, bevorzugt in einer Innenraumverkleidung, besonders bevorzugt in einer Türinnenverkleidung des Kraftfahrzeugs.

Die Aufgabe wird weiterhin insbesondere gelöst durch ein Verfahren zur Herstellung einer Lichtleitvorrichtung für ein Kraftfahrzeug, mit zumindest den folgenden Schritten:
- Herstellen eines Lichtleitkörpers aus durchsichtigem Kunststoffmaterial, wobei mindestens eine Lichteintrittsfläche und mindestens eine Lichtaustrittsfläche vorgesehen wird;
- Abdecken eines Bereichs des Lichtleitkörpers mittels eines im Wesentlichen undurchsichtigen Abdeckmaterials, wobei das Abdecken mittels eines Spritzgussverfahrens durchgeführt wird.

Hierdurch wird eine sehr präzise Lichtabschottung erreicht und es können verschiedenste Abstrahlgeometrien bzw. Abschattungsgeometrien erreicht werden, da aufgrund des Aufspritzens des Abdeckmaterials der Gestaltung eine große Flexibilität gegeben ist, was z.B. bei Abdeckfilzen oder Abdeckbändern nicht möglich ist. Zudem ist das Verfahren in der Montage weniger aufwendig, da der Lichtleiter bereits das gewünschte Abstrahlverhalten aufweist. Die etwas komplexere Herstellung der Lichtleitvorrichtung fällt aufgrund des gut automatisierbaren Spritzgussverfahrens nicht ins Gewicht. Es müssen keine extra Bauteile zur Abdeckung vorgesehen werden, was auch Kosten spart. Zuletzt benötigt das Bauteil aufgrund der maßangepassten Abdeckung im Vergleich zu der bisherigen Abdecklösung weniger Bauraum.

Unter durchsichtigem Kunststoffmaterial wird bevorzugt ein Material mit einem Transmissionsgrad von mehr als 50 %, besonders bevorzugt mehr als 70 %, ganz besonders bevorzugt mehr als 90 % verstanden. Bevorzugt ist das Material farblos und bevorzugt klar. Der Lichtleitkörper ist bevorzugt einstückig ausgebildet.

Unter einer Lichteintrittsfläche wird bevorzugt eine Fläche des Lichtleitkörpers verstanden, über welche im eingebauten Zustand des Lichtleitelements Licht aus einer Lichtquelle, bevorzugt einer aktiven Lichtquelle (z.B. LED des Fahrzeugs), in den Lichtleitkörper willentlich eingekoppelt wird.

Unter einer Lichtaustrittsfläche wird bevorzugt eine Fläche des Lichtleitkörpers verstanden, über welche im eingebauten Zustand Licht aus dem Lichtleitkörper willentlich ausgekoppelt wird, bevorzugt so, dass durch das Licht eine Beleuchtung des Fahrzeuginnenraums oder eines Elements im Fahrzeuginnenraum (direkt oder indirekt) stattfindet. Besonders bevorzugt ist die Lichtaustrittsfläche eine Sichtfläche, d.h. eine Fläche, welche von einem Fahrzeugführer bei normalem Gebrauch des Fahrzeugs und dessen Funktionen (d.h. ohne das Fahrzeug zu zerstören und Blenden abzunehmen) sichtbar ist.

Unter einem im Wesentlichen lichtundurchlässigen Abdeckmaterial wird bevorzugt ein Material (bei der jeweils verwendeten Schichtdicke) mit einem Transmissionsgrad von weniger als 50 %, bevorzugt weniger als 30 %, besonders bevorzugt weniger als 10 % verstanden. Bevorzugt ist das Abdeckmaterial dunkel oder schwarz, wodurch eine besonders effektive Lichtabsorption und somit Streulichtminimierung erfolgt. Besonders bevorzugt ist das Material hell oder weiß, wodurch das Licht innerhalb des Lichtleitkörpers effizienter zu den vorhandenen Lichtaustrittsflächen propagieren kann. Bevorzugt ist dabei die Schichtdicke so hoch, dass das unerwünschte Streulicht schwach genug ist. Ganz besonders bevorzugt weist das Abdeckmaterial eine helle bzw. weiße innere Schicht und eine dunkle bzw. schwarze äußere Schicht auf, womit bei effizienter Lichtausnutzung und insgesamt dünner Schichtdicke der beiden Abdeckmaterialschichten eine sehr gute Streulichtabschirmung erzielt wird. Die beiden Schichten werden dabei bevorzugt im Mehrkomponentenspritzgussverfahren aufgebracht.

Hell sind neben weiß z.B. auch die folgenden Farben nach Pantone® Farbsystem (hellste zuletzt): 692 C, 524 C, 243 C, 420 C, 707 C, 1895 C, 7520 C, Cool Gray 3 C, 250 C, 579 C, 671 C, 353 C, 5523 C, 7406 C, 5035 C, 7471 C, 2708 C, 565 C, 5595 C, 7501 C, 473 C, 1555 C, 382 C, 318 C, 2975 C, 516 C, 3375 C, 510 C, 2365 C, 4545 C, 136 C, 344 C, 4685 C, 5455 C, 605 C, 495 C, 217 C, 3245 C, 482 C, 459 C, 571 C, 713 C, 5875 C, 7534 C, 7632 C, 263 C, 489 C, 5175 C, 615 C, 182 C, 141 C, 468 C, 358 C, 538 C, 324 C, 552 C, 503 C, 352 C, 162 C, 304 C, 5807 C, 684 C, 149 C, 580 C, 7548 C, 366 C, 332 C, 719 C, 474 C, 584 C, 7405 C, 123 C, Cool Gray 2 C, 678 C, 531 C, 635 C, 135 C, 1355 C, 699 C, 5245 C, 1225 C, 196 C, 381 C, 517 C, 544 C, 7478 C, 572 C, 610 C, 7500 C, 496 C, 7527 C, 427 C, 129 C, Warm Gray 1 C, 2706 C, 290 C, 351 C, 712 C, 643 C, 614 C, 566 C, 116 C, 389 C, 2707 C, 7486 C, 691 C, 677 C, 365 C, 148 C, 628 C, 460 C, 657 C, 155 C, 7457 C, 109 C, 7403 C, 545 C, Green 0921 C, 128 C, 475 C, 122 C, 604 C, 650 C, 331 C, 7422 C, 585 C, 1345 C, 5315 C, 573 C, 134 C, 7485 C, 396 C, 7604 C, 317 C, Cool Gray 1 C, 3965 C, 706 C, 7402 C, 374 C, 7507 C, 670 C, 7404 C, Yellow 012 C, 609 C, 380 C, 642 C, 121 C, 3955 C, Medium Yellow C, 7443 C, 1215 C, 698 C, 621 C, 115 C, 586 C, 603 C, 108 C, 664 C, 127 C, 461 C, 120 C, 388 C, 7506 C, 373 C, 114 C, 608 C, Yellow C, 587 C, 7541 C, 387 C, 113 C, 7436 C, 379 C, 107 C, 372 C, 3945 C, 649 C, 395 C, 705 C, 607 C, 1205 C, 102 C, 663 C, 394 C, 7401 C, 106 C, 656 C, 602 C, 386 C, 3935 C, 7499 C, 601 C, 101 C, 803 C, 393 C, 100 C, 600 C, Yellow 0131 C.

Dunkel sind neben schwarz z.B. auch die folgenden Farben nach Pantone® Farbsystem (dunkelste zuerst): Black 6 C, 296 C, 5395 C, 7547 C, 5255 C, 2765 C, 282 C, 275 C, 2768 C, 532 C, 2766 C, 276 C, 274 C, 2755 C, 289 C, Neutral Black C, 273 C, 419 C, 5463 C, 539 C, 2757 C, 2745 C, 2965 C, 2748 C, 281 C, 2758 C, 433 C, 2695 C, 662 C, 2747 C, 2738 C, Black 3 C, 655 C, 303 C, 546 C, 280 C, 2685 C, 2627 C, Reflex Blue C, 426 C, 2756 C, 295 C, 2767 C, Black 4 C, 7463 C, 4975 C, Black C, 533 C, Blue 072 C, 2735 C, 5535 C, 547 C, 627 C, 2617 C, 648 C, 2746 C, 5467 C, 540 C, Black 2 C, 288 C, 7449 C, 294 C, Black 5 C, 440 C, 412 C, 5605 C, Dark Blue C, 2607 C, 669 C, Violet C, 7546 C, 309 C, 534 C, 287 C, Medium Purple C, 2955 C, 560 C, 4625 C, 548 C, 2736 C, 302 C, 7645 C, 567 C, 3035 C, 262 C, 5115 C, 504 C, 654 C, 5185 C, 7421 C, 497 C, 447 C, 439 C, 518 C, 690 C, Black 7 C, 541 C, 7631 C, 2597 C, 7533 C, 661 C, 490 C, 286 C, 7644 C, 476 C, 3308 C, 7652 C, 229 C, 2623 C, 222 C, 432 C, 3435 C, 7694 C, 525 C, 269 C, 261 C, 7448 C, 5265 C, 4695 C, 316 C, 7554 C, 511 C, 553 C, 2613 C, 260 C, 483 C, 5747 C, 519 C, 732 C, 209 C, 7630 C, 7680 C, 7428 C, 3302 C, 7643 C, 188 C, 448 C, 268 C, 1817 C, 293 C, 7650 C, 446 C, 7651 C.

Mittels eines Spritzgussverfahrens auf den Bereich aufgebracht bedeutet bevorzugt, dass das Abdeckmaterial an den Lichtleitkörper angeschmolzen ist, und besonders bevorzugt, dass das Abdeckmaterial im geschmolzenen Zustand auf den Lichtleitkörper aufgebracht worden ist.

In einem weiter bevorzugten Ausführungsbeispiel der vorliegenden Erfindung ist mittels des Abdeckmaterials eine Steckeinrichtung, insbesondere Anschlussbuchse, einer der vorhandenen Lichteintrittsflächen für eine Lichtquelle, z.B. LED, oder einen Lichtleiter, z.B. eine Glasfaser, ausgebildet. In einem weiter bevorzugten Verfahren wird eine entsprechende Steckeinrichtung während des Spritzgießens des Abdeckmaterials ausgebildet.

Hierdurch ist eine einfache Verbindungsmöglichkeit mit der Lichtquelle gegeben, wobei die Verbindungsmöglichkeit bereits per se lichtdicht ausgestaltet sein kann. Bevorzugt ist die Steckeinrichtung eine Anschlussbuchse, welche eine zentrale Ausnehmung aufweist, deren bevorzugt kragenförmige Ränder aus dem Abdeckmaterial bestehen und an deren Boden sich eine Lichteintrittsfläche des Lichtleitkörpers befindet.

In einem weiter bevorzugten Ausführungsbeispiel der vorliegenden Erfindung weist eine der vorhandenen Lichteintrittsflächen eine konkave Eintrittskontur auf. In einem weiter bevorzugten Verfahren wird eine Lichteintrittsfläche mit einer konkaven Eintrittskontur versehen.

Hierdurch ist eine effektive Lichteinkopplung aus einer LED oder Glasfaser gegeben. Bevorzugt ist die konkave Eintrittskontur kreisförmig begrenzt, wobei der Kreisdurchmesser dem Durchmesser einer LED oder Glasfaser im Wesentlichen entspricht. Bevorzugt ist die Lichtleitvorrichtung in dem Kraftfahrzeug eingebaut und eine LED oder ein Glasfaserende (oder ein anderer Lichtleitkörper) ist maximal 20 mm, bevorzugt maximal 10 mm besonders bevorzugt maximal 3 mm von der konkaven Eintrittskontur entfernt von dieser gegenüberliegend angeordnet oder bevorzugt mit dieser in Kontakt und bevorzugt ist der Durchmesser dieser LED oder Glasfaser gleich dem Durchmesser der konkaven Eintrittskontur, die annähernd kreisförmig ist.

In einem weiter bevorzugten Ausführungsbeispiel der vorliegenden Erfindung macht der Bereich des Lichtleitkörpers, auf den das Abdeckmaterial aufgebracht ist, mindestens 60% der Oberfläche des Lichtleitkörpers, die nicht Lichteintrittsfläche und nicht Lichtaustrittsfläche ist, aus.

Hierdurch wird eine sehr großflächige Lichtabschottung erreicht, so dass Licht nur dorthin gelangt, wo es austreten soll. Bevorzugt macht der Bereich mindestens 70 %, besonders bevorzugt mindestens 90 %, ganz besonders bevorzugt mindestens 99 % der besagten Oberfläche aus, d.h. dass in den letzten beiden Fällen, der Lichtleitkörper mit Ausnahme der vorhandenen Lichteintrittsflächen und Lichtaustrittsflächen im Wesentlichen durch das Abdeckmaterial ummantelt ist.

In einem weiter bevorzugten Ausführungsbeispiel der vorliegenden Erfindung ist die Lichtleitvorrichtung eine Lichtleitvorrichtung einer Innenraumverkleidung eines Kraftfahrzeugs, insbesondere einer Türinnenverkleidung eines Kraftfahrzeugs. In einem weiter bevorzugten Verfahren wird die Lichtleitvorrichtung in eine Innenraumverkleidung eines Kraftfahrzeugs, insbesondere eine Türinnenverkleidung eines Kraftfahrzeugs eingebaut.

Bevorzugt ist die Lichtleitvorrichtung so verbaut, dass die Lichtaustrittsflächen in den Fahrgastinnenraum gerichtet sind, so dass das austretende Licht hauptsächlich in den Fahrgastinnenraum strahlt.

In einem weiter bevorzugten Verfahren der vorliegenden Erfindung wird der Lichtleitkörper mittels eines Spritzgussverfahrens in derselben Spritzgussmaschine hergestellt, mit welcher das Abdecken erfolgt, und die Lichtleitvorrichtung wird somit in einem Mehrkomponentenspritzgussverfahren hergestellt.

Hierdurch ist eine sehr effiziente Herstellung der Lichtleitvorrichtung gegeben. Das Mehrkomponentenspritzgussverfahren ist bevorzugt ein Zweikomponentenspritzgussverfahren.

In einem weiter bevorzugten Verfahren der vorliegenden Erfindung wird, nachdem der Lichtleitkörper gespritzt wurde und bevor das Abdeckmaterial an den Lichtleitkörper angespritzt wird, der Lichtleitkörper oder ein eine Kavität enthaltendes Werkzeug in seiner Position verdreht.

Hierdurch wird der Spritzvorgang effizient durchgeführt. Unter einer Kavität wird bevorzugt eine Mulde verstanden, welche eine Negativkontur des zu spritzenden Bauteils aufweist.

Bevorzugt erfolgt das Verdrehen mittels eines Drehtellerwerkzeugs, wobei der Lichtleitkörper in einer Kavität in einem Drehteller gespritzt wird und dann der Drehteller gedreht wird (z.B. um 180°), der Lichtleitkörper anschließend in eine andere Kavität eingeführt wird (welche eine Kontur für das Abdeckmaterial aufweist), in welcher schließlich das Abdeckmaterial an den Lichtleitkörper gespritzt wird. Bevorzugt weist der Drehteller mindestens zwei Kavitäten auf, und in einer Drehposition des Drehtellers werden mindestens zwei Lichtleitvorrichtungen gespritzt, wobei bei der einen Lichtleitvorrichtung der Lichtleitkörper gespritzt wird und bei der anderen Lichtleitvorrichtung bereits das Abdeckmaterial gespritzt wird. Das Drehtellerverfahren führt zu einer effizienten Produktion und ist besonders bevorzugt.

Alternativ zum Verdrehen mittels des Drehtellerwerkzeugs erfolgt das Verdrehen mittels eines Indexwerkzeugs, wobei nach dem ersten Spritzvorgang (Lichtleitkörper) Steckeinsätze für Konturen ausfahren und in eine andere Position verdreht werden. Die Steckeinsätze sind z.B. an Säulen gehalten.

Alternativ zum Verdrehen mittels Drehtellerwerkzeug oder Indexwerkzeug erfolgt ein Umsetzen, bevorzugt mit Verdrehen, mittels eines Umsetzverfahrens, bei welchem der Lichtleitkörper nach dem ersten Spritzen aus der Kavität herausgenommen wird (z.B. mittels eines automatischen Greifers), und in einen andere Kavität für das Abdeckmaterial eingesetzt und dort fixiert wird und sodann das Abdeckmaterial an den Lichtleitkörper gespritzt wird.

Alternativ zu einem Verdrehen kann ein Core Back Verfahren angewendet werden, wobei nach dem ersten Spritzvorgang die Kontur zurückgezogen wird, so dass ein Freiraum zwischen dem Lichtleitkörper und der Kontur entsteht, in welchen dann anschließend das Abdeckmaterial gespritzt wird. Dieses Verfahren eignet sich je nach Geometrie der Lichtleitvorrichtung insbesondere bei einfachen Bauteilen ohne Hinterschneidungen.

Die Erfindung soll nun anhand von Zeichnungen beispielhaft weiter veranschaulicht werden. Hierbei zeigen:
Figur 1 ein Beispiel einer erfindungsgemäßen Lichtleitvorrichtung,
Figur 2 den Lichtleitkörper der Lichtleitvorrichtung aus Fig. 1
Figur 3 eine separate Ansicht des um den Lichtleitkörper umspritzten Abdeckmaterials der Lichtleitvorrichtung aus Fig. 1
Figur 4 eine gegenüber Fig. 1 etwas gedrehte Ansicht der Lichtleitvorrichtung aus Fig. 1, in welcher insbesondere die Eintrittskontur gut zu erkennen ist.

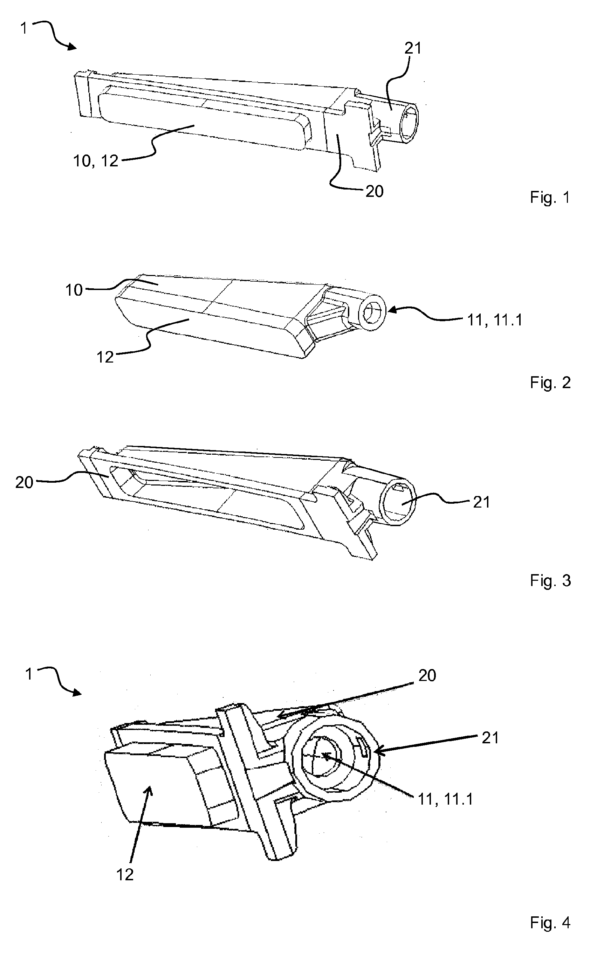

**Figur 1** zeigt ein Beispiel einer erfindungsgemäßen Lichtleitvorrichtung 1 für ein Kraftfahrzeug. Sie weist einen Lichtleitkörper 10 aus durchsichtigem Kunststoffmaterial auf, wobei der Lichtleitkörper 10 eine Lichteintrittsfläche 11 und eine Lichtaustrittsfläche 12 aufweist. Der Lichtleitkörper 10 ist in einem Bereich von mehr als 90 % der Oberfläche, die nicht Lichteintrittsfläche 11 oder Lichtaustrittsfläche 12 ist, mittels eines im Wesentlichen lichtundurchlässigen Abdeckmaterials 20 abgedeckt, welches mittels eines Spritzgussverfahrens auf den Bereich aufgebracht ist. Ferner handelt es sich um eine Lichtleitvorrichtung 1 einer Türinnenverkleidung eines Kraftfahrzeugs. Die Flächen rings um die Lichtaustrittsfläche 12 sind hier ebenfalls nicht umspritzt - diese werden später durch ein anderes Gehäuseteil der Türinnenverkleidung abgedeckt.

Die Herstellung beinhaltet die folgenden Schritte:
- Herstellen des Lichtleitkörpers 10 aus durchsichtigem Kunststoffmaterial, wobei hierbei die Lichteintrittsfläche 11 und die Lichtaustrittsfläche 12 ausgeformt werden;
- Abdecken des Bereichs des Lichtleitkörpers 10 mittels des im Wesentlichen undurchsichtigen Abdeckmaterials 20, wobei das Abdecken mittels eines Spritzgussverfahrens durchgeführt wird.

**Figur 2** zeigt den Lichtleitkörper 10 der Lichtleitvorrichtung 1 aus Fig. 1. In diesem Beispiel wird der Lichtleitkörper 10 mittels eines Spritzgussverfahrens in derselben Spritzgussmaschine hergestellt, mit welcher das Abdecken erfolgt. Die Lichtleitvorrichtung 1 wird somit in einem Zweikomponentenspritzgussverfahren hergestellt. Der Lichtleitkörper 10 wird, nachdem er gespritzt wurde und bevor das Abdeckmaterial 20 an den Lichtleitkörper 10 angespritzt wird, in seiner Position mittels eines Drehtellers verdreht.

**Figur 3** zeigt eine separate Ansicht des angespritzten Abdeckmaterials 20 der Lichtleitvorrichtung 1 aus Fig. 1. Mittels des Abdeckmaterials 20 ist eine Steckeinrichtung 21, hier Anschlussbuchse, der Lichteintrittsfläche 11 für eine LED ausgebildet.

**Figur 4** zeigt eine gegenüber Fig. 1 etwas gedrehte Ansicht der Lichtleitvorrichtung 1 aus Fig. 1, in welcher insbesondere die Eintrittskontur 11.1 der Lichteintrittsfläche 11 gut zu erkennen ist.

### Bezugszeichenliste

- 1: Lichtleitvorrichtung
- 10: Lichtleitkörper
- 11.1: Eintrittskontur
- 11: Lichteintrittsfläche
- 12: Lichtaustrittsfläche
- 20: Abdeckmaterial
- 21: Steckeinrichtung

## Patentansprüche

1. Lichtleitvorrichtung (1) für ein Kraftfahrzeug, wobei die Lichtleitvorrichtung (1) einen Lichtleitkörper (10) aus durchsichtigem Kunststoffmaterial aufweist, wobei der Lichtleitkörper (10) mindestens eine Lichteintrittsfläche (11) und mindestens eine Lichtaustrittsfläche (12) aufweist und wobei der Lichtleitkörper (10) in einem Bereich mittels eines im Wesentlichen lichtundurchlässigen Abdeckmaterials (20) abgedeckt ist,
**dadurch gekennzeichnet, dass** das Abdeckmaterial (20) mittels eines Spritzgussverfahrens auf den Bereich aufgebracht ist.

2. Lichtleitvorrichtung (1) gemäß Anspruch 1, wobei mittels des Abdeckmaterials (20) eine Steckeinrichtung (21), insbesondere Anschlussbuchse, einer der vorhandenen Lichteintrittsflächen (11) für eine Lichtquelle oder einen Lichtleiter ausgebildet ist.

3. Lichtleitvorrichtung (1) gemäß einem der vorhergehenden Ansprüche, wobei eine der vorhandenen Lichteintrittsflächen (11) eine konkave Eintrittskontur (11.1) aufweist.

4. Lichtleitvorrichtung (1) gemäß einem der vorhergehenden Ansprüche, wobei der Bereich des Lichtleitkörpers (10), auf den das Abdeckmaterial (20) aufgebracht ist, mindestens 60% der Oberfläche des Lichtleitkörpers (10), die nicht Lichteintrittsfläche (11) und nicht Lichtaustrittsfläche (12) ist, ausmacht.

5. Lichtleitvorrichtung (1) gemäß einem der vorhergehenden Ansprüche, wobei die Lichtleitvorrichtung (1) eine Lichtleitvorrichtung (1) einer Innenraumverkleidung eines Kraftfahrzeugs ist.

6. Verwendung einer Lichtleitvorrichtung (1) gemäß einem der vorhergehenden Ansprüche in einem Kraftfahrzeug, bevorzugt in einer Innenraumverkleidung, besonders bevorzugt in einer Türinnenverkleidung des Kraftfahrzeugs.

7. Verfahren zur Herstellung einer Lichtleitvorrichtung (1) für ein Kraftfahrzeug, mit zumindest den folgenden Schritten:
- Herstellen eines Lichtleitkörpers (10) aus durchsichtigem Kunststoffmaterial, wobei mindestens eine Lichteintrittsfläche (11) und mindestens eine Lichtaustrittsfläche (12) vorgesehen wird;
- Abdecken eines Bereichs des Lichtleitkörpers (10) mittels eines im Wesentlichen undurchsichtigen Abdeckmaterials (20);
**dadurch gekennzeichnet, dass** das Abdecken mittels eines Spritzgussverfahrens durchgeführt wird.

8. Verfahren gemäß Anspruch 7, wobei der Lichtleitkörper (10) mittels eines Spritzgussverfahrens in derselben Spritzgussmaschine hergestellt wird, mit welcher das Abdecken erfolgt, und die Lichtleitvorrichtung somit in einem Mehrkomponentenspritzgussverfahren hergestellt wird.

9. Verfahren gemäß Anspruch 8, wobei, nachdem der Lichtleitkörper (10) gespritzt wurde und bevor das Abdeckmaterial (20) an den Lichtleitkörper (10) angespritzt wird, der Lichtleitkörper (10) oder ein eine Kavität enthaltenes Werkzeug in seiner Position verdreht wird.
